# EUROPÄISCHE PATENTANMELDUNG

(11) **EP 0 979 759 A1**
(43) Veröffentlichungstag der Anmeldung: **16.02.2000**
(21) Anmeldenummer: 99114062.5
(22) Anmeldetag: 20.07.1999
(51) Int. Cl.: B60R 3/00, A01C 15/00

(54) **Ladesteg**

(30) Priorität: 13.08.1998 DE 19836741
(71) Anmelder: Amazonen-Werke H. Dreyer GmbH & Co. KG, 49205 Hasbergen (DE)
(72) Erfinder: Gattermann, Bernd, Dipl.-Ing., 27798 Hude (DE); Tiessen, Reimer Uwe, 26135 Oldenburg (DE); Reinke, Wilfried, 26123 Oldenburg (DE)

(57) **Zusammenfassung**

Ladesteg (11) für eine vorzugsweise gezogene, einen Rahmen (1) aufweisende landwirtschaftliche Verteil- und/oder Bestellkombination mit einem Vorratsbehälter (7), wobei der Ladesteg (11) auf einer der in Fahrtrichtung gesehenen Längsseiten des Vorratsbehälters (7) mittels zweier Schwenkkonsolen (12) angeordnet ist. Die Schwenkkonsolen (12) sind jeweils mittels eines Gelenkes (13), deren Schwenkachse (14) zumindest annähernd aufrecht verlaufen, am Rahmen (1) oder Vorratsbehälter (7) verschwenkbar befestigt. Die Schwenkkonsolen (12) sind mittels Gelenken (15), deren Schwenkachsen (16) aufrecht verlaufen, an einem Längsträger (17) des Ladesteges (11) schwenkbar angeordnet, wobei die Ladeplattform (19) des Ladesteges (11) mittels Gelenken (20), deren Gelenkachsen (21) zumindest annähernd in Fahrtrichtung und in der Hauptausrichtung des Längsträgers (17) verlaufen, schwenkbar befestigt ist.

## Beschreibung

Die Erfindung betrifft einen Ladesteg gemäß des Oberbegriffes des Patentanspruches 1.

Ladestege für gezogene landwirtschaftliche Verteil- und Bestellkombinationen sind in vielfältiger Weise bekannt. Diese Ladestege sind in der Regel auf der Rückseite des Vorratsbehälters an dem Tragrahmen der Bestellkombination einer Verteilmaschine angeordnet. Diese Anordnung des Ladesteges ist aus verschiedenen Gründen nicht zufriedenstellend.

Der Erfindung liegt die Aufgabe zugrunde, einen Ladesteg, der vorteilhaft positioniert am Vorratsbehälter angeordnet ist und der gleichzeitig bei Nichtgebrauch in eine Position enganliegend an dem Vorratsbehälter zu bringen ist, zu schaffen.

Diese Aufgabe wird erfindungsgemäß durch die kennzeichnenden Merkmale des Patentanspruches 1 gelöst. Infolge dieser Maßnahmen ergibt sich eine vorteilhafte Anordnung und Ausbildung des Vorratsbehälters sowohl für seine Beladestellung wie auch für seine Stellung, in welche er nicht benötigt wird. Durch die erfindungsgemäße Maßnahme läßt sich der Ladesteg in einfacher Weise aus der Beladeposition direkt an den Vorratsbehälter anschwenken.

Eine einfache Verriegelung des Ladesteges in der Ladeposition läßt sich dadurch erreichen, daß der Ladesteg in der Beladeposition durch die abgeklappte Ladeplattform in seine Ladeposition verriegelbar ist.

Um den Vorratsbehälter in seiner Nichtbeladeposition zu sichern, ist vorgesehen, daß der Ladesteg in seiner an dem Vorratsbehälter angeschwenkten Stellung mittels eines Verriegelungselementes verriegelbar ist.

Um in einfacher Weise auf den Ladesteg gelangen zu können, ist vorgesehen, daß zumindest an einer der Schwenkkonsolen ein Leiterelement angeordnet ist.

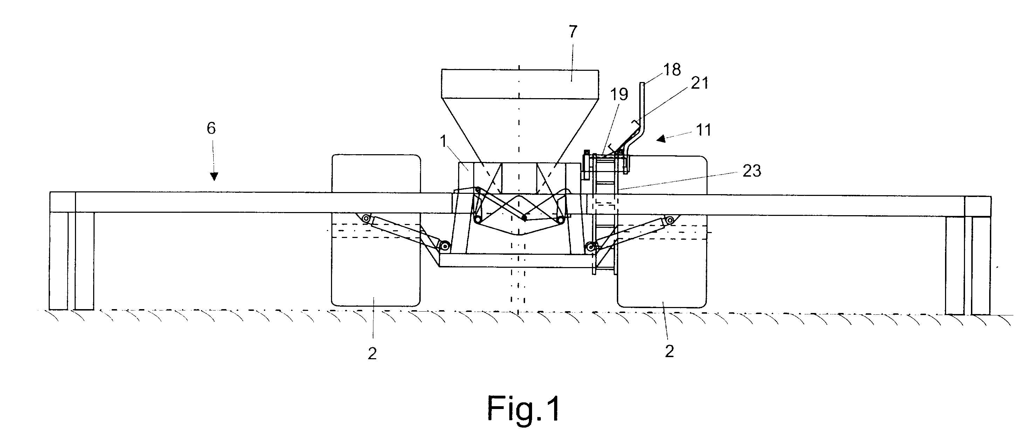

Weitere Einzelheiten der Erfindung sind der Beispielsbeschreibung und den Zeichnungen zu entnehmen. Hierbei zeigen
- Fig.1: den an einer gezogenen landwirtschaftlichen Bestellkombination angeordneten Ladesteg in seiner Ladeposition in der Ansicht von hinten und in Prinzipdarstellung,

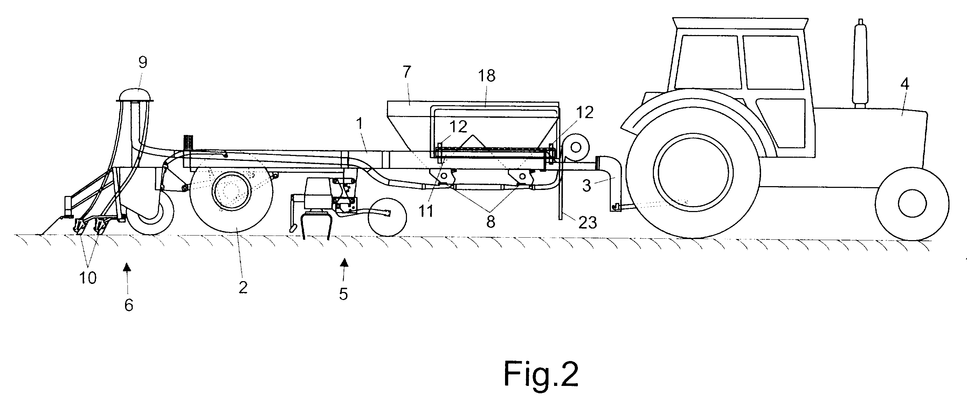

- Fig.2: die Verteilmaschine mit dem Ladesteg in Seitenansicht und

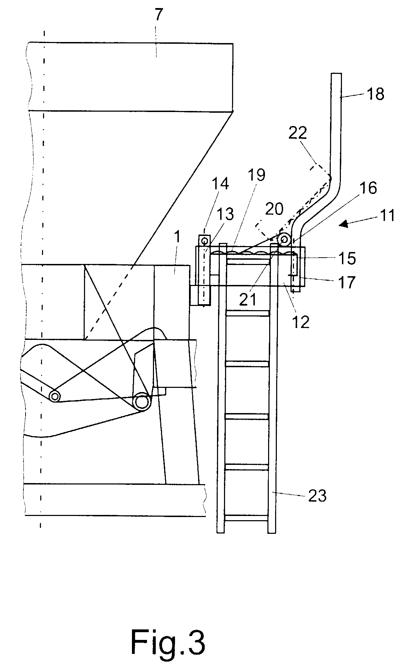

- Fig.3: den Ladesteg in der Ansicht gemäß Fig.1, jedoch in vergrößertem Maßstab.

Die landwirtschaftliche Bestellkombination weist den Tragrahmen 1, der sich über die Laufräder 2 auf dem Boden abstützen kann und an seiner Vorderseite die Zugdeichsel 3 aufweist, mittels welcher er mit einer Zugmaschine 4 gekuppelt wird. Im rückwärtigen Bereich des Tragrahmens 1 sind nicht näher erläuterte Bodenbearbeitungsgeräte 5 und eine Sävorrichtung 6 angeordnet. Im vorderen Bereich des Tragrahmens 1 ist der Vorratsbehälter 7 angeordnet, über welchem das sich im Vorratsbehälter 7 befindliche Material über eine Dosier- und Fördereinrichtung 8 im hinteren Bereich angeordneten Verteilerelementen 9 und somit den Säscharen 10 zugeführt wird.

Seitlich des Vorratsbehälters 7 ist an dem Vorratsbehälter 7 bzw. an dem Tragrahmen 1 ein Ladesteg 11 angeordnet. Der Ladesteg 11 weist zwei beabstandet zueinander angeordnete Schwenkkonsolen 12 auf, die mittels eines Gelenkes 13, deren Schwenkachsen 14 zumindest annähernd aufrechtverlaufen, am Rahmen 1 oder am Vorratsbehälter 7 schwenkbar befestigt sind. Desweiteren sind die Schwenkkonsolen 12 auf der dem Rahmen 1 abgewandten Seite mittels Gelenken 15, deren Schwenkachsen 16 aufrecht und parallel zu den Schwenkachsen 14 verlaufen, an einem Längsträger 17 des Ladesteges 11 schwenkbar angeordnet. An diesem Längsträger 17 ist ein aufrecht verlaufendes Geländer 18 angeordnet. Desweiteren weist der Ladesteg 11 eine Ladeplattform 19 auf, die mittels Gelenken 20, deren Gelenkachsen 21 in Fahrtrichtung und in Hauptausrichtung des Längsträgers 17 verlaufen, schwenkbar befestigt ist. Die Ladeplattform 19 kann mittels der Gelenke 20 in die abgeklappte Beladeposition und in einer aufrechten Position 22 verschwenkt werden. In der abgeklappten Stellung 19, also der Beladeposition, wird durch die abgeklappte Plattform 19 der Ladesteg 11 in seiner Ladeposition verriegelt. Um den Ladesteg 11 an dem Vorratsbehälter 7 anschwenken zu können, ist die Ladeplattform 19 aus der abgeklappten Stellung in die aufrechte, mittels strichpunktierten Linien, dargestellten Position 21 an das Geländer 18 des Ladesteges 11 anschwenkbar, so daß der Ladesteg 19 an den Vorratsbehälter 7 anschwenkbar ist. In der an dem Vorratsbehälter 7 angeschwenkten Stellung ist der Ladesteg 11 mittels eines nicht dargestellten Verriegelungselementes verriegelbar und wird so in dieser Position gesichert. An einer der Schwenkkonsolen 12 ist ein Leiterelement 23 zum bequemen Besteigen der Ladeplattform 19 des Ladesteges 11 angeordnet.

## Patentansprüche

1. Ladesteg für eine vorzugsweise gezogene, einen Rahmen aufweisende landwirtschaftliche Verteil- und/oder Bestellkombination mit einem Vorratsbehälter, dadurch gekennzeichnet, daß der Ladesteg (11) auf einer der in Fahrtrichtung gesehenen Längsseiten des Vorratsbehälters (7) mittels zweier Schwenkkonsolen (12) angeordnet ist, daß die Schwenkkonsolen (12) jeweils mittels eines Gelenkes (13), deren Schwenkachse (14) zumindest annähernd aufrecht verlaufen, am Rahmen (1) oder Vorratsbehälter (7) verschwenkbar befestigt sind, daß die Schwenkkonsolen (12) mittels Gelenken (15), deren Schwenkachsen (16) aufrecht verlaufen, an einem Längsträger (17) des Ladesteges (11) schwenkbar angeordnet sind, daß die Ladeplattform (19) des Ladesteges (11) mittels Gelenken (20), deren Gelenkachsen (21) zumindest annähernd in Fahrtrichtung und in der Hauptausrichtung des Längsträgers (17) verlaufen, schwenkbar befestigt ist.

2. Ladesteg nach Anspruch 1, dadurch gekennzeichnet, daß der Ladesteg (11) in der Beladeposition durch die abgeklappte Ladeplattform (17) in seiner Ladeposition verriegelbar ist.

3. Ladesteg nach Anspruch 1, dadurch gekennzeichnet, daß der Ladesteg (11) in seiner an dem Vorratsbehälter (1) angeschwenkten Stellung mittels eines Verriegelungselementes verriegelbar ist.

4. Ladesteg nach Anspruch 1, dadurch gekennzeichnet, daß zumindest an einer der Schwenkkonsolen (12) ein Leiterelement (23) angeordnet ist.
